# EUROPÄISCHE PATENTSCHRIFT

(11) **EP 2 283 454 B1**
(45) Veröffentlichungstag und Bekanntmachung des Hinweises auf die Patenterteilung: **07.12.2011**
(21) Anmeldenummer: 09749701.0
(22) Anmeldetag: 28.04.2009
(51) Int. Cl.: G06K 17/00, G06K 19/077, H05K 3/12

(54) **DRUCKVERFAHREN ZUR INTEGRATION EINES RFID-TRANSPONDERS IN VERPACKUNGEN**
PRINTING PROCESS FOR INTEGRATING AN RFID TRANSPONDER INTO PACKAGES
PROCÉDÉ D'IMPRESSION DESTINÉ À L'INTÉGRATION D'UN TRANSPONDEUR RFID DANS DES EMBALLAGES

(30) Priorität: 21.05.2008 DE 102008001922
(43) Veröffentlichungstag der Anmeldung: 16.02.2011
(73) Patentinhaber: Manroland AG, 63075 Offenbach (DE)
(72) Erfinder: WALTHER, Thomas, CH-9000 Sankt Gallen (CH)
(86) Internationale Anmeldenummer: PCT/EP2009/055090
(87) Internationale Veröffentlichungsnummer: WO 2009/141211

(56) Entgegenhaltungen:
- WO-A-2007/132053
- US-A1- 2005 092 845
- US-A1- 2006 214 801

## Beschreibung

Die Erfindung betrifft ein Verfahren nach dem Oberbegriff von Patentanspruch 1,

RFID-Transponder für den UHF Bereich weisen eine Dipolantenne auf, die elektrisch leitende Bahnen, die linienförmig ausgebildet sein können und hinsichtlich ihrer elektromagnetischen Eigenschaften an elektrische Parameter des RFID - Chips angepasst sind. Zur Ankopplung des Chips an die Antenne gibt es einen Ankopplungsbereich, in welchem die Antenne, die in diesem Bereich oftmals als gerade verlaufender Leiter ausgebildet ist, eine sehr kurze Unterbrechung zur Anordnung des RFID-Chips, auch Speisestelle genannt, aufweist.

Im Allgemeinen kann gesagt werden, dass eine Antenne optimal funktioniert, wenn sie eine Antennenlänge von λ/2, d.h. die Hälfte der Wellenlängen der jeweiligen verwendeten Frequenz, aufweist. Bei einer UHF-Antenne würde dies bei einer Frequenz von 950 - 990 MHz eine Antennelänge von ca. 15 cm bedeuten. Für große Produktverpackungen mag dies noch realisierbar sein, doch viele Verpackungsgrößen ermöglichen nicht die Integration einer solch großen Antenne. Schon allein dieser Umstand der Anpassung an die Verpackungsform und Verpackungsgröße führt folglich zu einer Vielzahl von gefalteten oder fraktalen Bauformen.

Im Grundsatz weist eine Antenne immer eine Resonanzstruktur und Impedanz anpassende Bestandteile auf. Die Aufgabe der Impedanz anpassenden Struktur ist die Impedanz der Antenne auf die Eingangsimpedanz des Mikrochips anzupassen, um eine optimale Energieübertragung mit geringsten Verlusten zu gewährleisten. Die einzelnen Mikrochips unterscheiden sich jedoch in ihrer Eingangsimpedanz. Diese ist oftmals sogar innerhalb des Lieferprogramms eines Herstellers unterschiedlich. Unterschiedliche Eingangsimpedanzen bedingen folglich unterschiedliche Antennenformen, um eine optimale Leistung zu bieten.

Grundlegend kann festgestellt werden, dass Materialien in der RFID-Antennenumgebung die Performance beeinflussen und daher für eine optimale Antennenperformance in idealer Weise berücksichtigt werden müssen. Bei der Verpackung stellt sich oftmals die Frage, ob der RFID-Transponder in die Verpackung oder auf der Außenseite aufgebracht werden soll. Viele Designer wünschen sich eine weitgehende Integration in die Verpackung, damit das werbewirksame Outfit der Verpackung nicht durch ein oftmals unschönes RFID-Tag gestört wird.

Bei dem Einfluss des Verpackungsmaterials lassen sich zwei Effekte unterscheiden:
- eine Abschirmung der Funkstrecke und
- eine Veränderung der Impedanz

Die Veränderung der Impedanz kann durch das Antennendesign beeinflusst werden, während Abschirmeffekte nicht dadurch beeinflusst werden können. Neben den Bedruckstoffeigenschaften müssen die Veredelungsformen der Verpackung mit berücksichtigt werden. Kritische Faktoren, die die Leistung des Substratmaterials im Zusammenhang mit der RFID-Technologie bestimmen, sind die Dielektrizitätskonstante (auch relative Permittivität) und der Dielektrizitätsverlust bzw. die Verlusttangente (auch Dissipationsfaktor genannt). Die relative Permittivität bestimmt die Geschwindigkeit des Signals und dadurch die elektrische Länge von Antennenleitungen, die auf dem Substrat platziert werden. Der Dielektrizitätsverlust kennzeichnet die Verlustmenge, die für die Hochfrequenzsignale auftreten, die das Substratmaterial durchlaufen.

Die Kenntnis des Dielektrizitätsverlust ist dann wichtig, wenn die Antenne auf der Innenseite des Verpackungsmaterials platziert wird. Dabei müssen nicht nur das Substrat, sondern auch gegebenenfalls nachfolgende Veredelungsschritte, wie Druck und Lackierung, in die Betrachtung mit einbezogen werden.

Der Druck von Antennen direkt auf das Verpackungsmaterial, wie er unter anderem in den Offenlegungsschriften WO 2007/000245 A1, WO 2005/086087 A1 und der WO 2005/013189 A2 beschrieben sind, hat den Vorteil, dass beliebige Antennenformen erzeugt werden können, die auf das Verpackungsmaterial gedruckt werden können. Durch den Druck lässt sich somit eine optimale Anpassung an das Verpackungsmaterial, den Verpackungsinhalt und die Bauform der Verpackung erzeugen.

Aus der WO 2007/132053 A1 ist ein Verfahren beschrieben, das zum Herstellen von Produkten dient, die einen oder mehrere Transponder enthalten. Als entsprechende Produkte können Verpackungen vorgesehen sein. Zur Anpassung der Impedanzwerte der Transponder an die Umgebungsverhältnisse in oder an der Verpackung ist jeweils ein Impedanz-Element vorgesehen, das in elektrischem Kontakt mit der Antenne des Transponders angebracht ist.

Aus der US 2006/0214801 A1 sind ein Radio-Frequence-Tag (RFID) und ein Verfahren zu dessen Anpassung bekannt. In dem RF Tag ist ein Chip und eine Antenne enthalten, die auf dielektrischem Substrat angebracht sind. Zur Anpassung der Impedanz-Verhältnisse zwischen dem Chip und der Antenne wird die Länge der Antenne für optimale Verhältnisse in Luft verändert, so dass die Wellenlänge der Antenne an die durch die Verpackung laufenden Radiowellen adaptiert ist.

Aus der US 2005/0092845 A1 ist eine selbst kompensierende Antenne für Substrate bekannt, die unterschiedliche Dielektrizitätskonstanten aufweisen. Hierzu wird die Antennestruktur mäanderförmige Induktionsleiter in der Verbindung zwischen einem Chip und der Antenne auf.

Aufgabe der Erfindung ist daher den Druck von Antennen so zu verbessern, dass Verpackungsmaterialien leichter herstellbar sind.

Die Lösung der Aufgabe gestaltet sich nach den Merkmalen von Patentanspruch 1.

Erfindungsgemäß wird dabei vorgeschlagen, dass Auftragsbezogen in einer Software oder einem Softwaremodul unter Eingabe von Kennwerten für die elektrische Druckform, der Bauform der Verpackung, den Kennwerten des Bedruckstoffes und eventuell darauf befindlichen Veredelungsformen eine Antennenform in einem mit der drucktechnischen Vorstufe kompatiblen Datenform erzeugt wird und das Drucklayout mit Antenne wie eine zusätzliche Druckfarbe behandelt wird.

Zu Vereinfachung können die Kennwerte für Bedruckstoffe in Klassen eingeteilt oder aus Datenbanken abgerufen werden. Der Abruf aus einer Datenbank ist insbesondere dann vom Vorteil, wenn auf Daten vorheriger Druckaufträge oder auf Datenmaterial von Zulieferern zurückgegriffen werden kann. So könnten zum Beispiel Bedruckstofflieferanten Datenmaterial (z.B. Kennwerte zu Permittivität, Permeabilität) von Bedruckstoffen liefern, die später bei der Auslegung der Antenne mit berücksichtigt werden können.

Das Verfahren zur Integration von RFID-Antennen in ein Druckprodukt arbeitet mit einer Software einer Druckvorstufenanwendung oder über eine separate Softwareanwendung, die vektorbasierte oder pixelbasierte mit der Druckvorstufe kompatible Grafikdatenformate erzeugen kann. Dabei wird ein Antennendesign für eine RFID-Transponderanwendung erzeugt. Die Erzeugung erfolgt automatisiert auf den jeweiligen Druckauftrag bezogen direkt in der Druckvorstufe.

Dabei werden bei der Auslegung der Antenne Parameter, die die RFID-Transponderleistung beeinflussen und die aus dem jeweiligen Druckauftrag vorgegeben werden, bei der Auslegung des Antennendesigns berücksichtigt. Danach wird das wie vorstehend erzeugte Antennendesign auf eine Druckform ausbelichtet oder in einer anderen geeigneten Form auf der Druckform erzeugt. Anschließend wird die Antenne drucktechnisch mit einer elektrisch leitfähigen Druckfarbe oder einer anderen elektrisch leitfähigen Beschichtung oder einem Folienauftrag, wie durch Kaltfolientransfer, auf das Substrat gedruckt.

Die Antennenkontur wird berechnet, indem wenigstens einer der folgenden Kennwerte des Bedruckstoffes des Druckauftrags, wie Permittivität und/oder Dissipationsfaktor und/oder Impedanz und/oder Bedruckstoffdicke und/oder Rauhigkeit einbezogen werden.

Weiterhin kann die Antennenkontur unter Berücksichtigung des beim Design zur Verfügung gestellten Druckbereichs und/oder der Verpackungsform für den Antennendruck berechnet werden. Außerdem kann das später für die Verpackung vorgesehene Füllgut bei der Antennenauslegung mit berücksichtigt werden.

Die Herstellung der Verpackung erfolgt häufig durch Veredelungsschritte des Bedruckstoffes. Hierfür kommen zum Beispiel Druckverfahren, Lackieren oder Folienübertrag in Frage. Diese Prozesse können ebenso bei der Auslegung der Antenne berücksichtigt werden.

Schließlich können einzelne oder auch alle die Antennenkontur beeinflussende Faktoren des Druckauftrags mit geeigneten Messmitteln messtechnisch ermittelt werden. Diese Daten können dann manuell oder über eine Datenschnittstelle in das System zur Herstellung des Layout der Antennen und das System zur Herstellung der Antennen übermittelt und/oder gespeichert werden.

Ersatzweise können einzelne oder alle die Antennenkontur beeinflussende Faktoren des Druckauftrags aus einer Datenbank von früher ausgeführten oder standardisierten Druckaufträgen ermittelt werden. Hierbei können Druckaufträge mit gleichen oder ähnlichen Parametern für die Herstellung gesucht werden. Mit diesen Daten und aus deren Kennwerte können die passenden Daten und Kennwerte für die aktuelle Antennenauslegung oder das aktuelle Antennendesign übernommen werden.

Schließlich kann auch auf externe Kennwerte zurückgegriffen werden. Hierbei können die Kennwerte aus externen Datenbanken ermittelt werden. Dies können Datenbanken von Lieferantendaten sein. Weiterhin können die Daten auch aus dem Druckmaterialien beigefügten Informationen entnommen werden.

## Patentansprüche

1. Verfahren zur Integration von RFID-Antennen in ein Druckprodukt, wobei in der Software einer Druckvorstufenanwendung oder über eine separate Softwareanwendung, die vektorbasierte oder pixelbasierte mit der Druckvorstufe kompatible Grafikdatenformate erzeugen kann, ein Antennendesign für eine RFID-Transponderanwendung erzeugt wird, und wobei das Druckprodukt zur Herstellung einer Verpackung ausgebildet ist,
**gekennzeichnet dadurch,**
- **dass** die Erzeugung auf den jeweiligen Druckauftrag bezogen in der Druckvorstufe so erfolgt, dass die Auslegung der Antenne abhängig von die RFID-Transponderleistung beeinflussenden Parametern der jeweiligen Verpackung mit oder ohne Inhalt erfolgt.

2. Verfahren zur Integration von RFID-Antennen in ein Druckprodukt gemäß anspruch1,
**gekennzeichnet dadurch,**
- **dass** die Erzeugung des Antennendesigns automatisiert auf den jeweiligen Druckauftrag bezogen in der Druckvorstufe erfolgt,
- wobei bei der Auslegung der Antenne die RFID-Transponderleistung beeinflussende Parameter des jeweiligen Druckauftrags bei der Auslegung des Antennendesigns berücksichtigt werden,
- **dass** das erzeugte Antennendesign dann auf eine Druckform ausbelichtet oder in einer anderen geeigneten Form auf der Druckform erzeugt wird und
- **dass** anschließend die Antenne drucktechnisch mit einer elektrisch leitfähigen Druckfarbe oder einer anderen elektrisch leitfähigen Beschichtung auf ein Substrat gedruckt wird.

3. Verfahren nach Anspruch 1 oder 2,
**gekennzeichnet dadurch, dass**
die Antennenkontur unter Verwendung mindestens einem der folgenden Kennwerte des Bedruckstoffes des Auftrags, wie Permittivität, Dissipationsfaktor, Impedanz, Bedruckstoffdicke oder Rauhigkeit berechnet wird.

4. Verfahren nach Anspruch 1 oder 2,
**gekennzeichnet dadurch, dass**
die Antennenkontur unter Berücksichtigung des beim Design zur Verfügung gestellten Druckbereichs und der Verpackungsform für den Antennendruck berechnet wird.

5. Verfahren nach Anspruch 2,
**gekennzeichnet dadurch, dass**
das spätere Füllgut der Verpackung bei der Antennenauslegung mit berücksichtigt wird.

6. Verfahren nach Anspruch 1 oder 2,
**gekennzeichnet dadurch, dass**
die Veredelung des Bedruckstoffes, zum Beispiel durch Bedrucken, Lackieren oder Folienübertrag bei der Auslegung der Antenne berücksichtigt wird.

7. Verfahren nach Anspruch 1 bis 6,
**gekennzeichnet dadurch, dass**
einzelne oder alle die Antennenkontur beeinflussende Faktoren des Druckauftrags mit geeigneten Messmitteln messtechnisch ermittelt werden, und manuell oder über eine Datenschnittstelle in das System zur Herstellung der Antennen übermittelt und/oder gespeichert werden.

8. Verfahren nach Anspruch 1 bis 6,
**gekennzeichnet dadurch, dass**
einzelne oder alle die Antennenkontur beeinflussende Faktoren des Druckauftrags aus einer Datenbank von Druckaufträgen ermittelt werden, indem Druckaufträge mit gleichen oder ähnlichen Parameter gesucht werden, und aus diesen die Kennwerte für die Antennenauslegung oder das Antennendesign übernommen werden.

9. Verfahren nach Anspruch 1 bis 6,
**gekennzeichnet dadurch,**
**dass** die Kennwerte aus Datenbanken, zum Beispiel aus Lieferantendatenbanken oder aus dem Druckmaterialien beigefügten Informationen, entnommen werden.

## Claims

1. A method for integrating RFID-aerials in a printing product, wherein in the software of a pre-printing stage application or via a separate software application, which can generate vector-based or pixel-based graphic data formats compatible with the pre-printing stage, an aerial design for an RFID transponder application is generated, and wherein the printing product is designed for producing a packaging, **characterized**
- **in that** the generation based on the respective printing order in the pre-printing stage is effected such that the design of the aerial takes place with or without content dependent on the parameters of the respective packaging influencing the RFID transponder output.

2. The method for integrating RFID aerials in a printing product according to Claim 1, **characterized**
- **in that** the generation of the aerial design takes place automated in the pre-printing stage based on the respective printing order,
- wherein during the design of the aerial the parameters of the respective printing order influencing the RFID transponder output are taken into account with the layout of the aerial design,
- **in that** the generated aerial design is then exposed or generated on the print form in any other suitable form and
- **in that** subsequently the aerial is printed onto a substrate by printing with an electrically conductive printing ink or another electrically conductive coating.

3. The method according to Claim 1 or 2, **characterized in that** the aerial contour is calculated using at least one of the following characteristic values of the substrate of the order such as permittivity, dissipation factor, impedance, substrate thickness or roughness.

4. The method according to Claim 1 or 2, **characterized in that** the aerial contour is calculated taking into account the printing region made available during the design and the packaging form for the aerial print.

5. The method according to Claim 2, **characterized in that** the goods to be filled into the packaging later on are also taken into account with the aerial layout.

6. The method according to Claim 1 or 2, **characterized in that** the conversion of the substrate for example through printing, coating or foil transfer is taken into account with the layout of the aerial.

7. The method according to Claim 1 to 6, **characterized in that** individual or all factors of the print application influencing the aerial contour are determined by measuring using suitable measuring means, and are transmitted and/or stored in the system manually or via a data interface for producing the aerials.

8. The method according to Claim 1 to 6, **characterized in that** individual or all factors of the print order influencing the aerial contour are determined from a database of printing orders, **in that** printing orders with same or similar parameters are searched for and the characteristic values for the aerial layout of the aerial design are taken over from these.

9. The method according to Claim 1 to 6, **characterized in that** the characteristic values are taken from databases, for example from supplier databases or from information enclosed with the printing materials.

## Revendications

1. Procédé d'intégration d'antennes RFID dans un produit d'impression, dans lequel, dans le logiciel d'une application de stade préalable à l'impression ou via une application logicielle séparée qui peut générer des formats de données graphiques basées sur vecteurs ou basées sur pixels compatibles avec le stade préalable à l'impression, un design d'antenne est créé pour une application de transpondeurs RFID, le produit d'impression étant conçu pour la réalisation d'un emballage,
**caractérisé en ce que**
- la création se fait dans l'étape préalable à l'impression en relation avec l'ordre d'impression respectif se fait de manière à ce que la conception ait lieu en fonction des paramètres influant sur la puissance du transpondeur RFID de l'emballage respectif avec ou sans contenu.

2. Procédé d'intégration d'antennes RFID dans un produit d'impression selon la revendication 1,
**caractérisé en ce que**
- la création du design de l'antenne se fait de manière automatisée dans l'étape préalable à l'impression en relation avec l'ordre d'impression respectif,
- sachant que, lors de la conception du design de l'antenne, on tient compte des paramètres influant sur la puissance du transpondeur RFID de l'ordre d'impression respectif lors de la conception du design de l'antenne,
- le design d'antenne créé est ensuite exposé sur un cliché d'impression ou réalisé sous une autre forme appropriée sur le cliché d'impression et que
- l'antenne est ensuite imprimée par technique d'impression avec une encre d'impression conductrice d'électricité ou un autre revêtement conducteur d'électricité.

3. Procédé selon la revendication 1 ou 2,
**caractérisé en ce que**
le contour de l'antenne est calculé en utilisant au moins une des valeurs caractéristiques suivantes du support d'impression de l'application, comme la permittivité, le facteur de dissipation, l'impédance, l'épaisseur du support d'impression ou la rugosité.

4. Procédé selon la revendication 1 ou 2,
**caractérisé en ce que**
le contour de l'antenne est calculé en tenant compte de la plage d'impression mise à disposition lors du design et de la forme de l'emballage pour l'impression de l'antenne.

5. Procédé selon la revendication 2,
**caractérisé en ce**
**qu'**il est tenu compte du produit qui sera mis plus tard dans l'emballage lors de la conception de l'antenne.

6. Procédé selon la revendication 1 ou 2,
**caractérisé en ce**
**qu'**il est tenu compte de la finition du support d'impression, par exemple par impression, vernissage ou application de film lors de la conception de l'antenne.

7. Procédé selon les revendications 1 à 6,
**caractérisé en ce que**
les facteurs distincts ou tous les facteurs influant sur le contour de l'antenne de l'ordre d'impression sont déterminés par technique de mesure avec des moyens de mesure appropriés et sont transférés et/ou sauvegardés manuellement ou via une interface de données dans le système de réalisation des antennes.

8. Procédé selon les revendications 1 à 6,
**caractérisé en ce que**
les facteurs distincts ou tous les facteurs influant sur le contour de l'antenne de l'ordre d'impression sont déterminés à partir d'une banque de données d'ordres d'impression par le fait que les ordres d'impression à paramètres identiques ou similaires sont recherchés et que les valeurs caractéristiques pour la conception de l'antenne ou le design de l'antenne sont relevées dans ceux-ci.

9. Procédé selon les revendications 1 à 6,
**caractérisé en ce que**
les valeurs caractéristiques sont prélevées dans des banques de données, par exemple des banques de données de fournisseurs ou des informations jointes aux matériaux d'impression.
